# EUROPÄISCHE PATENTSCHRIFT

(11) **EP 3 810 938 B1**
(45) Veröffentlichungstag und Bekanntmachung des Hinweises auf die Patenterteilung: **18.09.2024**
(21) Anmeldenummer: 19739887.8
(22) Anmeldetag: 21.06.2019
(51) Int. Cl.: F16B 5/04, B23K 20/12, F16B 19/08, B21J 15/02, F16B 5/08

(54) **VERBINDUNGSELEMENT UND BAUTEILVERBINDUNG, SOWIE VERFAHREN ZUR HERSTELLUNG DERSELBEN**
CONNECTING ELEMENT AND COMPONENT CONNECTION, AND METHOD FOR THE PRODUCTION THEREOF
ÉLÉMENT DE LIAISON ET ASSEMBLAGE D'ÉLÉMENTS, ET SON PROCÉDÉ DE FABRICATION

(30) Priorität: 21.06.2018 DE 102018114982
(43) Veröffentlichungstag der Anmeldung: 28.04.2021
(73) Patentinhaber: EJOT SE & Co. KG, 57319 Bad Berleburg (DE)
(72) Erfinder: WERKMEISTER, Marco, 99887 Georgenthal (DE); DUBIEL, Gerhard, 99897 Tambach-Dietharz (DE); BRANDAU-WOLFF, Angelique, 99897 Tambach-Dietharz (DE)
(74) Vertreter: Puschmann Borchert Kaiser Klettner Patentanwälte Partnerschaft mbB
(86) Internationale Anmeldenummer: PCT/EP2019/066532
(87) Internationale Veröffentlichungsnummer: WO 2019/243607

(56) Entgegenhaltungen:
- EP-A1- 1 420 173
- EP-B1- 1 420 173
- CN-A- 102 615 508
- DE-A1- 102006 053 800
- JP-A- 2002 174 219
- JP-A- 2003 071 574
- KR-B1- 101 622 959
- US-A- 3 364 807
- US-A1- 2012 243 960

## Beschreibung

Die Erfindung betrifft ein Verfahren zur Herstellung einer Bauteilverbindung gemäß dem Oberbegriff des Anspruchs 1 und eine Bauteilverbindung gemäß dem Oberbegriff des Anspruchs 9.

Nach dem Stand der Technik sind Verbindungselemente zur Verbindung zweier übereinanderliegender Bauteillagen bekannt. Diese sind unter anderem als Halbhohlstanzniete bekannt. Die US 2016/0332215 A1 offenbart einen solchen Halbholstanzniet, der unter Rotation gesetzt wird, wobei durch Rotation der Kontaktbereich zwischen Niet und Basislage erwärmt wird, dass ein leichteres Eindringen des Niets in die Basislage ermöglicht wird. Ferner sind Haltestrukturen innerhalb des Hohlraums des Elements vorgesehen, die ein axiales Lösen des Butzens innerhalb des Niets verhindern sollen.

Weiter ist aus der DE 10 2006 053 800 A1 ein Verfahren bekannt zur Verbindung zweier flächiger Bauteile mittels eines Verbindungselement, das mit der unteren Bauteillage eine Reibschweißverbindung eingeht und die obere Bauteillage zwischen der unteren Bauteillage und dem Verbindungselement eingespannt gehalten ist.

Ein weiteres Verfahren zur Verbindung zweier flächiger Bauteile mittels eines Verbindungselements und zugehörige Bauteilverbindung ist aus der CN 102 615 508 A bekannt.

Es ist Aufgabe der Erfindung ein Verbindungselement zur Herstellung einer Bauteilverbindung zur Verbesserung der Scherfestigkeit der übereinanderliegenden Bauteillagen anzugeben.

Ein bevorzugt in einer erfindungsgemäßen Bauteilverbindung oder einem erfindungsgemäßen Verfahren eingesetztes Verbindungselement weist in bekannter Weise einen Schaft und einen Antrieb auf, über den der Schaft in einer Drehrichtung antreibbar ist, wobei der hohlzylindrische Schaft wenigstens ein freies Ende aufweist, wobei der Antrieb dem freien Ende gegenüberliegend angeordnet ist, und wobei durch den hohlzylindrischen Schaft innerhalb des Schafts ein Hohlraum gebildet wird.

Ferner können im Hohlraum Mitnahmestrukturen angeordnet sein, die in Umfangsrichtung des hohlzylindrischen Schafts wirken. Die Mitnahmestrukturen verlaufen geradlinig parallel zur Elementachse oder mit einer Winkelabweichung von höchstens 20° gegenüber der Elementachse projiziert auf die Mantelfläche an der Mantelfläche und I oder die Mitnahmestrukturen sind antriebsseitig stirnseitig angeordnet.

Durch die Mitnahmestrukturen wird ein von dem hohlzylindrischen Schaft ausgeschnittener Butzen aus der Decklage der Bauteilverbindung herausgeschnitten und mitgedreht, so dass durch die Drehung des Butzens zusammen mit dem Verbindungselement eine Verschweißung des Butzens mit der Basislage erfolgen kann. Der mit der Basislage verschweißte Butzen erstreckt sich innerhalb der Decklage und stellt eine formschlüssige Verbindung in Scherrichtung her. Dies erhöht maßgeblich die Scherfestigkeit zwischen der Basis und der Decklage.

Bevorzugt weist das Verbindungselement eine mit dem Schaft verbundene Schulter auf. Dadurch kann neben der formschlüssigen Verbindung auch eine formschlüssige Verbindung zwischen der Decklage und der Schulter entlang der Elementlängsachse hergestellt werden. So können zwei Bauteile nicht nur verstärkt in Querrichtung sondern auch in Längsrichtung miteinander verbunden werden. Dies gilt insbesondere dann, wenn der Schaft nach Verschweißen des Butzens in einem Nietvorgang in der Basislage aufgeweitet wird.

Gemäß einer ersten Ausgestaltung kann die Schulter Teil eines den Schaft abschließenden Kopfes sein. Dies stellt eine besonders einfache Ausgestaltung ähnlich eines drehbaren Halbhohlstanznietes dar.

Alternativ kann die Schulter auch in Form einer Ringschulter ausgebildet sein, die eine zentrale Aussparung aufweist, deren geringster Durchmesser wenigstens dem Innendurchmesser des hohlzylindrischen Schafts entspricht. Dies hat zur Folge, dass eine formschlüssige Verbindung zwischen dem Ringbund und der Decklage hergestellt werden kann, und dennoch es dem Butzenmaterial ermöglicht wird, den hohlzylindrischen Schaft zu durchsteigen. Das aufgestiegene Material kann dann wieder verwendet werden, um den Kopf zu formen. Dadurch ergibt sich insgesamt ein geringer Materialeintrag in die Bauteilverbindung und dadurch eine geringere Aufbauhöhe.

Bevorzugt ist die zentrale Aussparung derart gestaltet, dass diese in ihrem Durchmesser weggehend vom freien Ende des Schafts zunimmt. Dadurch wird ein größeres Volumen zur Materialaufnahme des Butzens geschaffen und es kann eine Schultergeometrie geschaffen werden, die bei axialer Kraftbeaufschlagung besser in Richtung der Decklage gedrückt werden kann.

Bevorzugt ist der Antrieb im Kopf und / oder der Schulter gebildet. Dies sorgt für eine besonders effiziente Übertragung der Drehbewegung.

Gemäß einer weiteren bevorzugten Ausgestaltung kann vorgesehen sein, dass antriebsseitig stirnseitig angeordnete Mitnahmestrukturen in die Unterseite des Kopfes eingeformt sind.

In besonders vorteilhafter Weise sind die Mitnahmestrukturen, welche geradlinig parallel zur Elementmittelachse oder mit einer Winkelabweichung von 20° gegenüber der Elementmittelachse projiziert auf die Mantelfläche an der Mantelfläche verlaufen, erhaben ausgebildet. Dies hat den Vorteil, dass sich die erhabenen Strukturen besser in die Butzenwand eindrücken können, so dass zuverlässig eine drehende Mitnahme des Butzens gewährleistet ist. Bei einer erhabenen Mitnahmestruktur ist das radial weiter innen liegende Niveau flächenmäßig in einem Querschnitt geringer als das radial weiter außen liegende Niveau.

Zusätzlich oder an Stelle von erhabenen Mitnahmestrukturen, können die Mitnahmestrukturen, welche geradlinig parallel zur Elementmittelachse oder mit einer Winkelabweichung von 20° gegenüber der Elementmittelachse projiziert auf die Mantelfläche an der Mantelfläche verlaufen in Form von Nuten ausgebildet sein.

Gemäß einer weiteren bevorzugten Ausgestaltung kann vorgesehen sein, dass am freien Ende eine Schneidkante, insbesondere in Form einer Fase, angeordnet ist. Dies erleichtert zum einen das Ausschneiden des Butzens aus der Decklage und zum anderen das Eindringen des Verbindungselements in die Basislage, in der es in einem Umformvorgang an seinem freien Ende aufgeweitet wird.

Insbesondere ist das Verbindungselement aus einem Eisenmetall, insbesondere einem Stahl hergestellt.

Die Gesamtlänge eines erfindungsgemäßen Verbindungselements ist bevorzugt kleiner als 2,5-mal der Außendurchmesser des hohlzylindrischen Schafts, und ist insbesondere kürzer als 10 mm.

Es ist Aufgabe der Erfindung ein Verfahren zur Herstellung einer Bauteilverbindung und eine Bauteilverbindung anzugeben, wobei die Bauteilverbindung verbesserte Festigkeitswerte aufweist.

Die Erfindung, betrifft ein Verfahren zur Herstellung einer Bauteilverbindung zwischen zwei Bauteillagen, umfassend eine Basislage und eine darüber liegende Decklage, wobei ein einen hohlzylindrischen Schaft aufweisendes Verbindungselement unter Drehung und Axialkraft in die Decklage eingebracht wird. Dabei wird innerhalb des Schafts ein Butzen aus der Decklage herausgetrennt, und von dem Verbindungselement in seiner Drehung mitgenommen, wobei der Butzen unter Drehung und Anpresskraft mit der Basislage verschweißt wird, wonach das Verbindungselement in die Basislage wenigstens teilweise eingedrückt wird.

Bevorzugt beträgt die Drehzahl mit der das Verbindungselement angetrieben wird, bis der Butzen verschweißt wenigstens 2.000 Umdrehungen 1/min.

Das Verbindungselement kann dazu einen Halbhohlschaft oder einen Hohlschaft jeweils mit oder ohne Mitnehmerstrukturen aufweisen.

In einer Weiterbildung des erfindungsgemäßen Herstellungsverfahrens kann dieses wenigstens eine erste Prozessstufe umfassen, bei der das Verbindungselement bei hoher Drehzahl, von insbesondere mehr als 5000 1/min und einer Axialkraft von insbesondere weniger als 3kN aufgesetzt wird. Darüber kann sichergestellt werden, dass sich das Verbindungselement beim Ausschneiden des Butzens nicht verformt, bis das Verbindungselement die Oberfläche der Basislage erreicht hat.

Weiter kann erfindungsgemäß vorgesehen sein, dass eine zweite Prozessstufe ausgeführt wird, bei der das Festschweißen des ausgeschnittenen Butzens an der Basislage erfolgt, indem unter fortgesetzter Drehung eine Anpress-Axialkraft auf den Butzen aufgebracht wird, wobei die vom Werkzeug ausgeübte Axialkraft gegenüber der Anfangskraft erhöht wird. Diese kann bevorzugt über 6kN reichen. Die Drehzahl kann aus der ersten Stufe beibehalten oder abgesenkt werden, um möglichst Gleiteffekte zwischen dem Butzen und der unteren Bauteillage zu vermeiden.

Die zweite Prozessstufe kann beginnen, wenn ausgehend von der Ausgangslage, das Verbindungselement in Axialrichtung über die Dicke der Decklage verfahren wurde.

Die Anpresskraft kann auf ein Verbindungselement, das einen den hohlzylindrischen Schaft gegenüber seiner Eintreibrichtung abschließenden Kopf aufweist, über den Kopf des Verbindungselements auf den Butzen ausgeübt werden.

Ferner kann vorgesehen sein, dass das Verbindungselement entgegen der Eintreibrichtung wenigstens über dem Hohlraum des hohlzylindrischen Schafts offen ist und die Anpresskraft von einem Setzwerkzeug, das auch das Verbindungselement mit der Anpresskraft beaufschlagt unmittelbar auf den Butzen aufgebracht wird.

Zudem kann erfindungsgemäß eine dritte Prozessstufe ausgeführt werden. Die dritte Prozessstufe kann nachfolgend zur zweiten oder unmittelbar nach der ersten Prozessstufe ausgeführt werden.

In dieser Prozessstufe werden Verbindungselement und Butzen bei abnehmender Drehzahl, die insbesondere auf Null abnimmt, mit einer, gegenüber der Reib-Axialkraft der zweiten Prozessstufe erhöhten Axialkraft, von insbesondere mehr als 8 kN, beaufschlagt. Dadurch kann ein Formschluss des Verbindungselements in Axialrichtung mit Basislage und / oder Decklage hergestellt werden. Bevorzugt wird die zweite Prozessstufe beendet und dritte Prozessstufe eingeleitet, wenn der Kopf kurz vor Auflage auf der obersten Platte ist, insbesondere die Kopfunterseite zwischen 1/10 mm und 5/10 mm von der Decklage beabstandet ist. So kann in Kenntnis der Dicke der Bauteillagen und der Dimension des Verbindungselements vorab eine relative Verfahrstrecke berechnet werden. Die dritte Stufe wird bevorzugt nach einer vorgegebenen Zeitspanne beendet, wobei die Zeitspanne zwischen 0,1s bis 0,5s beträgt.

Insbesondere werden während der ersten und der zweiten Prozessstufe die Axialkraft und die Drehzahl derart geregelt, so dass versucht wird diese Größen möglichst konstant zu halten. Die dritte Prozessstufe kann ebenso geregelt werden. Bei einer solchen Vorgehensweise dringt das Verbindungselement unter Axialkraft und unter Rotation in die Bauteillagen ein, wobei die erst

Falls das Verbindungselement entgegen der Eintreibrichtung wenigstens über dem Hohlraum des hohlzylindrischen Schafts offen war und die Anpresskraft von einem Setzwerkzeug, das auch das Verbindungselement mit der Anpresskraft beaufschlagt, unmittelbar auf den Butzen aufgebracht wird, so dass dieser an seinem entgegen der Eintreibrichtung liegenden Ende aufgeweitet wird. So kann ein Formschluss zwischen dem Butzen mit der Decklage hergestellt werden. Der Formschluss kann mittelbar über das Verbindungselement oder unmittelbar mit der Decklage vorliegen.

Bevorzugt kann mit dem erfindungsgemäßen Verfahren eine Bauteilverbindung, umfassend wenigstens eine Lage aus einer Magnesiumlegierung und / oder wenigstens einer Lage aus einer Aluminiumlegierung, insbesondere AL 5xxx, AI 6xxx oder AI 7xxx hergestellt werden. Dazu wird in der ersten Prozessstufe eine Drehzahl von etwa 8000 U / min bei einer Axialkraft von etwa 2kN eingestellt, in der zweiten Prozessstufe eine Drehzahl von etwa 5000 U/min bei einer Axialkraft von etwa. 8 kN. Die Axialkraft in der dritten Stufe wird auf etwa 9kN geregelt und die Drehzahl auf 0 U/min. Das Verbindungelement in dieser Anordnung ist bevorzugt ein Stahl. "Etwa" in diesem Zusammenhang bedeutet eine Abweichung von plus-minus 20%

Ferner betrifft die Erfindung eine Bauteilverbindung umfassend eine Basislage und wenigstens eine darüber liegende Decklage, sowie ein Verbindungselement mit einem hohlzylindrischen Schaft und einem Antrieb, über den der Schaft in Drehrichtung antreibbar ist. Der hohlzylindrische Schaft weist ein freies Ende auf, wobei der Antrieb an dem dem freien Ende gegenüberliegenden Ende angeordnet ist. Durch den hohlzylindrischen Schaft wird ein Hohlraum gebildet.

Ein Teil des hohlzylindrischen Schafts am freien Ende des Schafts ist vollständig von der Basislage umgeben, wobei innerhalb des hohlzylindrischen Schafts ein Butzen von der Decklage abgetrennt ist.

Im Hohlraum des Verbindungselements besteht eine stoffschlüssige Verbindung zwischen der Basisalge und dem Butzen.

Bevorzugt sind im Hohlraum in Umfangsrichtung des hohlzylindrischen Schafts wirkende Mitnahmestrukturen angeordnet, die von dem Material des Butzens umschlossen sind und ferner besteht eine stoffschlüssige Verbindung zwischen der Basisalge und dem Butzen.

Bevorzugt kann die Bauteilverbindung eine in Axialrichtung wirkende formschlüssige Verbindung umfassen, indem radial verdrängtes Material des in Axialrichtung über die Decklage hinaus herausragenden Butzens zu einem Bund umgeformt ist, der die formschlüssige Verbindung mit der Decklage und / oder dem Verbindungselement bereitstellt.

Gemäß einer weiteren vorteilhaften Ausgestaltung kann eine in axialer Richtung wirkende formschlüssige Verbindung durch einen Formschluss des Verbindungselements mit der Decklage und einem Formschluss des Verbindungselements der Basislage vorliegen.

Erfindungsgemäß ist eine formschlüssige Verbindung mit der Basislage durch Aufweiten des freien in Eintreibrichtung liegenden Endes des Verbindungselements hergestellt.

Sinnvollerweise weist das Verbindungselement eine höhere Festigkeit als die Basislage und die Decklage auf. Dies stellt sicher, dass sowohl ein zuverlässiges Ausschneiden des Butzens aus der Decklage als auch ein Eindringen des Verbindungselements in die Basislage ermöglicht wird. Regelmäßig können die Basislage und die Decklage aus einem Nicht-Eisen-Metall bestehen und das Verbindungselement aus einem Stahl oder einem Nicht-Eisen-Metall.

Alternativ kann die Basislage und die Decklage oder nur die Decklage aus einem thermoplastischen Kunststoff bestehen und das Verbindungselement aus einem Kunststoff oder einem Stahl oder einem Nicht-Eisen-Metall.

In einer besonders vorteilhaften Ausgestaltung ist das Verbindungselement der Bauteilverbindung, wie zuvor beschrieben ausgebildet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1: eine Seitenansicht eines Verbindungselements für die Verwendung in einem erfindungsgemäßen Verfahren zur Herstellung einer Bauteilverbindung;
- Fig. 1A: eine Schnittansicht eines Verbindungselements gemäß Fig.1;
- Fig. 1B: einen Querschnitt durch den Schaft des Verbindungselements gemäß Fig. 1;
- Fig. 2: perspektivische Ansicht des Verbindungselements gemäß Fig. 1 auf den Bund;
- Fig. 3: eine Seitenansicht einer weiteren Ausgestaltung eines Verbindungselements für die Verwendung in einem erfindungsgemäßen Verfahren zur Herstellung einer Bauteilverbindung;
- Fig. 3A: eine Schnittansicht eines Verbindungselements gemäß Fig. 3;
- Fig. 3B: einen Querschnitt durch den Schaft des Verbindungselements gemäß Fig. 3;
- Fig. 4: eine Seitenansicht eines weiteren Verbindungselements;
- Fig. 4A: eine Schnittansicht eines Verbindungselements gemäß Fig.4
- Fig. 4B: eine Schnittansicht des Verbindungselements gemäß Fig.4
- Fig. 5A: ein erster Zustand während der Herstellung einer erfindungsgemäßen Bauteilverbindung mit einem Verbindungselement gemäß Fig.1;
- Fig. 5B: ein zweiter Zustand während der Herstellung einer erfindungsgemäßen Bauteilverbindung mit einem Verbindungselement gemäß Fig.1;
- Fig. 5C: ein dritter Zustand während der Herstellung einer erfindungsgemäßen Bauteilverbindung mit einem Verbindungselement gemäß Fig.1;
- Fig. 6A: ein erster Zustand während der Herstellung einer erfindungsgemäßen Bauteilverbindung mit einem Verbindungselement gemäß Fig. 4;
- Fig. 6B: ein zweiter Zustand während der Herstellung einer erfindungsgemäßen Bauteilverbindung mit einem Verbindungselement gemäß Fig. 4, und
- Fig. 6C: ein dritter Zustand während der Herstellung einer erfindungsgemäßen Bauteilverbindung mit einem Verbindungselement gemäß Fig. 4.

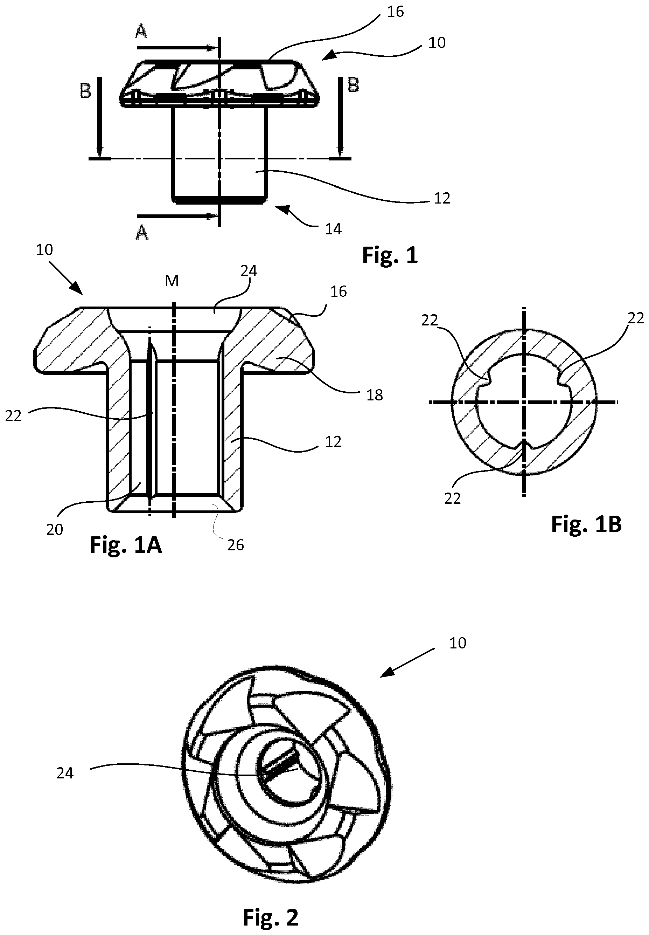

Fig. 1 zeigt ein Verbindungselement 10 zur erfindungsgemäßen Verbindung einer Basislage mit einer darüber liegenden Decklage in einer Seitenansicht. Das Verbindungselement 10 umfasst einen hohlzylindrischen Schaft 12 mit einem freien Ende 14 und einen am freien Ende 14 gegenüberliegenden Ende des hohlzylindrischen Schafts 12 angeordneten Antrieb 16. Der Antrieb 16 ist als Außenantrieb ausgebildet und weist entsprechende Formschlussstrukturen auf. Das Verbindungselement 10 wird in den nachfolgenden Figuren genauer beschrieben.

Fig. 1A zeigt eine Schnittansicht des Verbindungselements 10, Es zeigt den hohlzylindrischen Schaft 12, sowie einen Bund 18, an dem ein Antrieb 16 eingeformt ist. Der hohlzylindrische Schaft 12 weist an seiner inneren Mantelfläche 20 Rippen 22 auf, die sich in diesem Ausführungsbeispiel über die gesamte Länge des hohlzylindrischen Schafts 12 erstrecken, Die Rippen 22 des Verbindungselements 10 dienen dazu, einen aus der Decklage ausgenommenen Butzen in der Drehbewegung des Verbindungselements 10 mitzunehmen. Indem der Butzen in der Drehbewegung mitgenommen wird, kann dieser in einem Reibschweißvorgang stoffschlüssig mit der Basislage verbunden werden.

Das freie Ende 14 des hohlzylindrischen Schafts 12 ist mit einer Fase 26 versehen, um ein Durchdringen der Decklage zu erleichtern und gegebenenfalls ein Aufweiten des hohlzylindrischen Schaftes 12 in einem Verformungsvorgang in der Basislage zu ermöglichen.

Die Figur zeigt ferner die Rippen 22, die parallel zur Elementmittelachse M des Verbindungselements 10 verlaufen.

Fig. 1B ist ein Querschnitt B-B durch den Schaft 12 des Verbindungselements 10. Diesem ist zu entnehmen, dass in der vorliegenden Ausführungsform drei Rippen 22 an der Mantelfläche 20 angeordnet sind. Durch diese Rippen 22 wird ein aus der Decklage ausgestanzter Butzen in der Drehbewegung des Verbindungselements mitgenommen, sodass auf der Stirnseite eine Schweißverbindung zwischen dem Butzen und der Basislage erfolgen kann.

Besonders gut zu erkennen an der Figur 1A ist, dass das Verbindungselement 10 vollständig hohl ausgebildet ist. So erstreckt sich der Bund 18 um eine Öffnung 24 herum, die sich entgegengesetzt zum freien Ende 14 des Schafts 12 hin aufweitet. Auf diese Weise wird aus der Decklage ausgenommenes Material durch das Verbindungselement 10 während des Verbindungsvorgangs hindurchgeführt, und kann dadurch einen Formschluss zwischen dem Verbindungselement und dem Butzen realisieren.

Fig. 2 zeigt eine perspektivische Ansicht des Verbindungselements 10 gemäß Fig. 1. In Fig. 2 ist besonders gut die Öffnung 24 in der Mitte des Verbindungselements 10 zu erkennen.

Diese Öffnung 24 wird im Laufe des Verbindungsvorgangs vollständig ausgefüllt, sodass eine dichte Verbindung gewährleistet ist. Die Öffnung 24 erweist sich gerade bei Verbindungen, bei welchen keine formschlüssige Verbindung zwischen Verbindungselement und der Basislage festgestellt wird, als vorteilhaft.

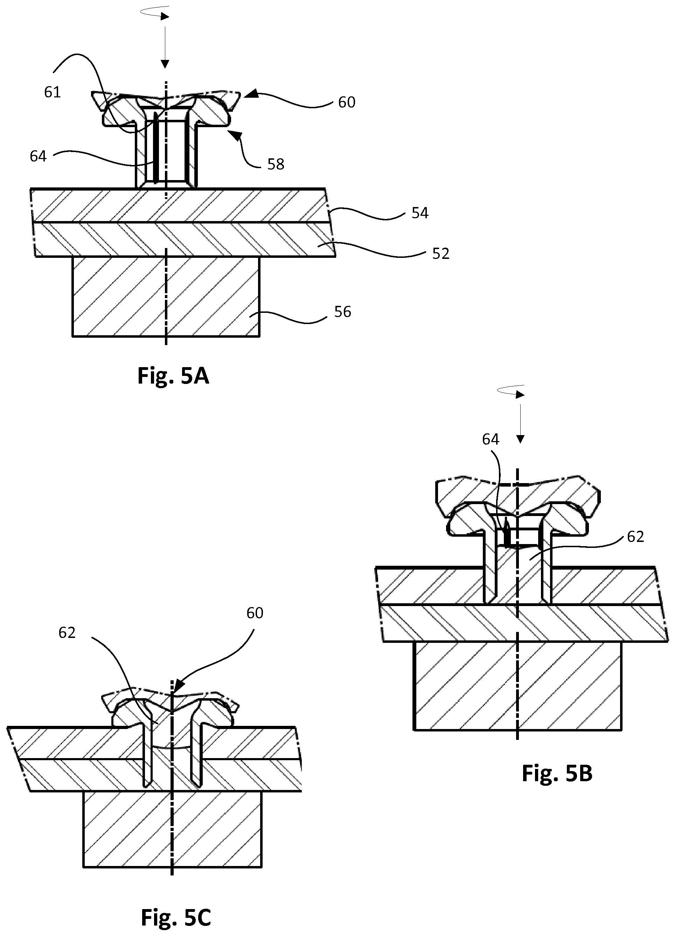

Der Vorgang zur Herstellung einer erfindungsgemäßen Bauteilverbindung wird im Einzelnen näher in Fig. 5a bis 5c beschrieben.

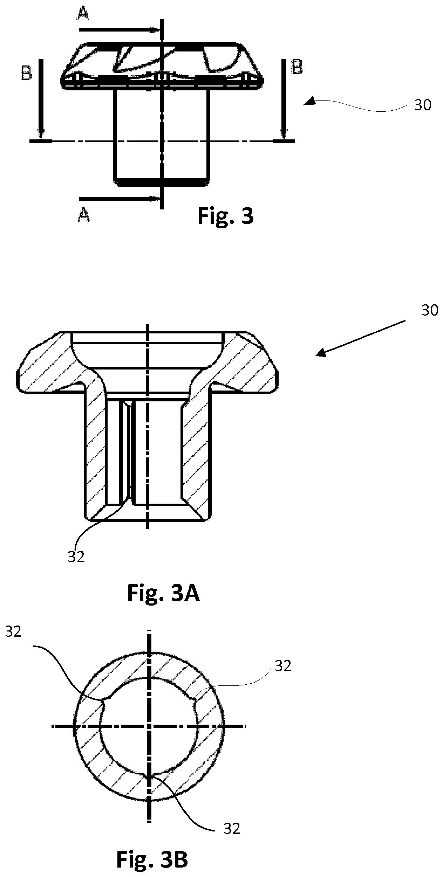

Die Figuren Fig. 3, Fig. 3A und Fig. 3B zeigen eine weitere Ausführungsform eines Verbindungselements 30. Fig. 3A zeigt eine Schnittansicht A-A des Verbindungselements 30 gemäß Fig.1. Das Verbindungselement 30 entspricht im Wesentlichen dem in der Fig. 1 beschriebenen Verbindungselement 10. Die Ausführung gemäß Fig. 3 unterscheidet sich von der gemäß Fig. 1 dadurch, dass die Mitnahmestrukturen nicht in Form von Rippen 22, sondern in Form von Nuten 32 ausgebildet sind. Dies ist besonders gut in der Querschnittsansicht B-B durch den Schaft Fig. 3B zu erkennen.

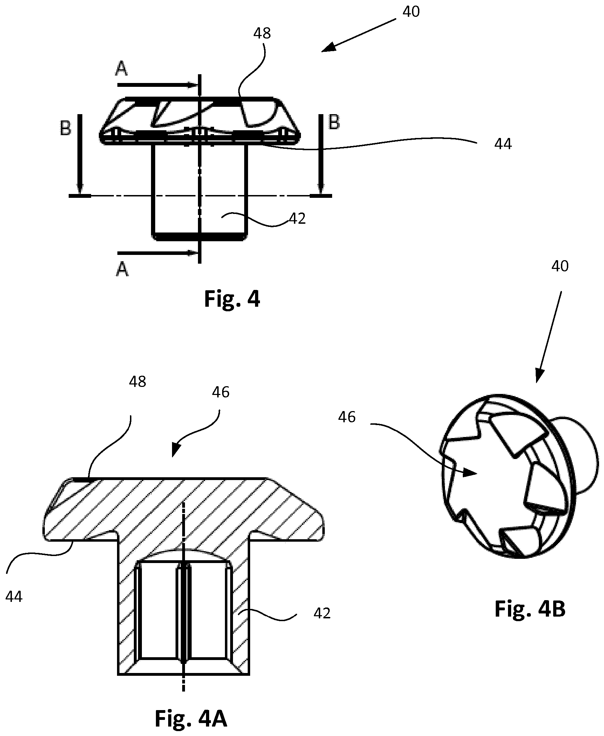

Fig. 4 zeigt eine weitere Ausgestaltung eines Verbindungselements 40, das, wie Fig. 1, einen Schaft 42 aufweist, wobei jedoch der Antrieb 48 nicht an einem Bund 44 sondern an einem, den Bund 44 aufweisenden Kopf 46 angeordnet ist. In dieser Ausführungsform schließt der Kopf 46 den hohlzylindrischen Schaft 42 an seinem kopfseitigen Ende ab, wie dies in der Schnittansicht A-A des Verbindungselements 40 in Fig. 4A dargestellt ist. In dieser Ausgestaltung kann das aus der oberen Decklage ausgeschnittene Material nicht aus dem Verbindungselement entweichen. Die Kraft auf den Butzen wird in dieser Ausgestaltung über den Kopf 46 vermittelt.

Fig. 4B zeigt eine perspektivische Ansicht des Verbindungselements 40 an dem die geschlossene Oberfläche des Kopfes 46 erkennbar ist.

Fig. 5A bis Fig. 5C zeigt exemplarisch die Arbeitsschritte eines Verfahrens zur Herstellung einer Verbindung zwischen einer Basislage 52, einer Decklage 54 und einem erfindungsgemäßen durchgehend hohlen Verbindungselement 58, beispielsweise gemäß der Fig. 1.

Die Basislage 52 und die Decklage 54 sind zwischen einem Amboss 56 und einer Setzeinheit aufgenommen.

Die Setzeinheit umfasst ein Antriebswerkzeug 60, das das Verbindungselement 58 in einer Drehbewegung antreiben kann. Gleichzeitig wird durch das Antriebswerkzeug eine axiale Anpresskraft in Eintreibrichtung auf das Verbindungselement 58 aufgebracht. Das Antriebswerkzeug 60 weist mittig eine, insbesondere konische Auswölbung 61 auf, die bei Anlage an das Verbindungselement 58 in den Hohlraum desselben hineinragt. Entsprechend wird das Verbindungselement 58 auf die Decklage 54 aufgesetzt.

Fig. 5B zeigt einen Verfahrensabschnitt zur Herstellung einer erfindungsgemäßen Bauteilverbindung, bei der das Verbindungselement 58 unter Rotation und Anpressdruck einen Butzen 62 aus der Decklage 54 ausgeschnitten hat, der in dem Hohlraum aufgenommen ist. Dieser wird von den Mitnahmestrukturen 64, die innerhalb des Hohlraums angeordnet sind, in der Drehbewegung mitgenommen und geht unter Anpresskraft und Rotation eine Reibschweißverbindung mit dem Material der Basislage 52 ein.

Fig. 5C zeigt das, bei weiterem Eindringen des Verbindungselements in die Basislage 52 aufsteigende Material des Butzens 62, das bis zum Antriebswerkzeug 60 aufsteigt und aufgrund der im Antriebswerkzeug vorliegenden Auswölbung 61 seitlich verdrängt wird, so dass der Butzen 62 über das kopfseitig konisch ausgenommene Verbindungselement 58 eine formschlüssige Verbindung herstellt. Auf diese Weise wird eine zuverlässige Verbindung der Decklage 54 mit der Basislage 52 über das Verbindungselement 58 und den Butzen 62 hergestellt.

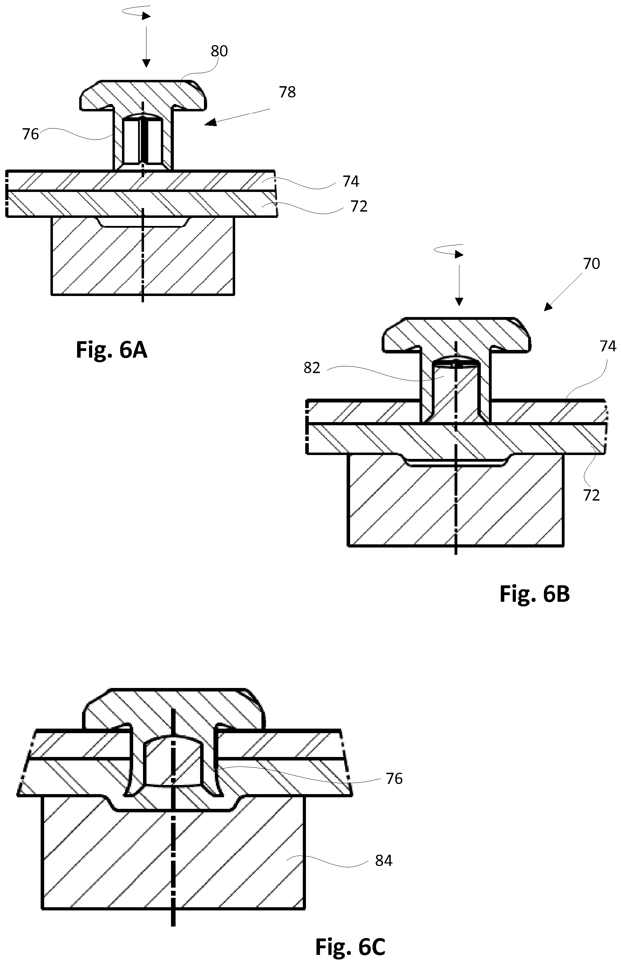

Fig. 6A bis Fig.6C zeigen eine weitere erfindungsgemäße Ausgestaltung des Verfahrens zur Herstellung einer Bauteilverbindung ähnlich dem in Fig. 5A bis 5C beschriebenen. Die Bauteilverbindung umfasst eine Basislage 72, eine darauf liegende Decklage 74 und ein erfindungsgemäßes Verbindungselement 78, insbesondere gemäß Fig. 4. Das Verbindungselement 78 weist einen den hohlen Schaft 76 des Verbindungselements 78 abschließenden Kopf 80 mit einem Antrieb auf. Die Basislage 72 und die Decklage 74 sind bevorzugt aus Aluminium, wohingegen das Verbindungselement 78 aus Stahl gebildet ist. Wie zuvor beschrieben wird das Verbindungselement 78 in einer ersten Schneidstufe bevorzugt mit einer Drehzahl von mehr als 2000 l/min in die Decklage 74 eingebracht, wobei die Anpresskraft bevorzugt weniger als 3 kN beträgt. Dadurch wird der Butzen 82 aus dem Material der Decklage 74 ausgeschnitten und über die Mitnahmestrukturen, die an der Innenseite der Mantelfläche, bevorzugt als parallel zur Elementmittelachse M verlaufende Rippen ausgebildet sind, in der Drehbewegung des Verbindungselements 78 mitgenommen und stirnseitig mit der Decklage 74 verschweißt. Die Verschweißung erfolgt bevorzugt bei einer Erhöhung der Anpresskraft gegenüber der vorangehenden Schneidstufe. Die Anpresskraft auf den Butzen 82 wird vom Antriebswerkzeug (hier nicht dargestellt) über den Kopf des Verbindungselements übertragen. Im Weiteren zeigt Fig. 5C die endgültig hergestellte Verbindung, wobei zwischen der Basislage 72 und dem Butzen 82 eine stoffschlüssige Verbindung hergestellt ist, wobei ein Umformen des Verbindungselements 78 erfolgt, indem gemäß einer Nietverbindung, das Verbindungselement 78 mit Hilfe eines Ambosses 84 in die Basislage 72 eindringt und so umgeformt wird, dass sich das in der Basislage 72 liegende Ende des Schafts 76 aufweitet und so eine formschlüssige Verbindung in Setzrichtung zwischen Basislage 72 und Decklage 74 bereitstellt. Der Nietvorgang findet insbesondere bei einer erhöhten Anpresskraft statt.

Der durch das Reibschweißen mit der Basislage 72 verbundene Butzen 78 stellt so eine verbesserte Belastbarkeit der Verbindung in Scherrichtung also quer zur Setzrichtung bereit.

## Patentansprüche

1. Verfahren zur Herstellung einer Bauteilverbindung zwischen zwei Bauteillagen (52, 54; 72, 74),
umfassend eine Basislage (52, 72) und eine darüber liegende Decklage (54, 74), wobei ein einen hohlzylindrischen Schaft (12, 42, 76) aufweisendes Verbindungselement (10, 30, 40, 58, 78) unter Drehung und Axialkraft in die Decklage (54, 74) eingebracht wird, wobei innerhalb des Schafts ein Butzen (62, 82) aus der Decklage (54, 74) herausgetrennt wird, und von dem Verbindungselement in seiner Drehung mitgenommen wird, wobei der Butzen (62, 82) unter Drehung und Anpresskraft mit der Basislage (52, 72) verschweißt wird, wonach das Verbindungselement (10, 30, 40, 58, 78) in die Basislage (52, 72) wenigstens teilweise eingedrückt wird.

2. Verfahren nach Anspruch 1, **dadurch gekennzeichnet, dass** die Drehzahl, mit der das Verbindungselement (10, 30, 40, 58, 78) angetrieben wird bis der Butzen (62, 82) verschweißt ist, wenigstens 2.000 Umdrehungen 1/min beträgt.

3. Verfahren nach Anspruch 2, **dadurch gekennzeichnet, dass** eine erste Prozessstufe ausgeführt wird, in der das Verbindungselement (10, 30, 40, 58, 78) bei einer Trenn-Drehzahl und Trenn-Axialkraft aufgesetzt wird, so dass sich das Verbindungselement (10, 30, 40, 58, 78) beim Heraustrennen des Butzens (62, 82) so lange nicht verformt, bis das Verbindungselement (10, 30, 40, 58, 78) die Oberfläche der Basislage (52, 72) erreicht hat.

4. Verfahren nach Anspruch 3, **dadurch gekennzeichnet, dass** eine zweite Prozessstufe ausgeführt wird, bei der das Festschweißen des ausgeschnittenen Butzens (62, 82) an der Basislage (52, 72) erfolgt, indem unter fortgesetzter Drehung eine Schweiß-Axialkraft auf den Butzen (62, 82) aufgebracht wird, wobei die vom Werkzeug ausgeübte Schweiß-Axialkraft gegenüber der Trenn-Axialkraft erhöht wird.

5. Verfahren nach Anspruch 4, **dadurch gekennzeichnet, dass** das Verbindungselement (10, 30, 40, 58, 78) einen den hohlzylindrischen Schaft (12, 42, 76) gegenüber seiner Eintreibrichtung abschließenden Kopf aufweist, wobei die Schweiß-Axialkraft auf den Butzen (62, 82) durch den Kopf des Verbindungselements ausgeübt wird.

6. Verfahren nach Anspruch 4, **dadurch gekennzeichnet, dass** das Verbindungselement (10, 30, 40, 58, 78) entgegen der Eintreibrichtung wenigstens über der Innenfläche des hohlzylindrischen Schafts (12, 42, 76) offen ist und die Anpresskraft von einem Setzwerkzeug, das auch das Verbindungselement (10, 30, 40, 58, 78) mit der Anpresskraft beaufschlagt, auf den Butzen (62, 82) aufgebracht wird.

7. Verfahren nach einem der vorangehenden Ansprüche 4 bis 6, **dadurch gekennzeichnet, dass** eine dritte Prozessstufe ausgeführt wird, bei der die Schweiß-Axialkraft auf Verbindungselement (10, 30, 40, 58, 78) und Butzen (62, 82) bei abnehmender Drehzahl mit gegenüber der Schweiß-Axialkraft erhöhter Niet-Axialkraft zur Herstellung des Formschlusses in Axialrichtung mit Basislage (52, 72) und / oder Decklage (54, 74) ausgeübt wird.

8. Verfahren nach Anspruch 7, **dadurch gekennzeichnet, dass** das Verbindungselement (10, 30, 40, 58, 78) entgegen der Eintreibrichtung wenigstens über der Innenfläche des hohlzylindrischen Schafts (12, 42, 76) offen ist und die Anpresskraft von einem Setzwerkzeug, das auch das Verbindungselement (10, 30, 40, 58, 78) mit der Anpresskraft beaufschlagt, auf den Butzen (62, 82) aufgebracht wird, wobei der Butzen (62, 82) an seinem entgegen der Eintreibrichtung liegenden Ende aufgeweitet wird.

9. Bauteilverbindung umfassend eine Basislage (52, 72) und wenigstens eine darüber liegende Decklage (54, 74), sowie ein Verbindungselement (10, 30, 40, 58, 78) mit einem hohlzylindrischen Schaft (12, 42, 76) und einem Antrieb, über den der Schaft (12, 42, 76) in Drehrichtung antreibbar ist, wobei der hohlzylindrische Schaft wenigstens ein freies Ende aufweist, wobei der Antrieb dem freien Ende gegenüberliegend angeordnet ist, wobei durch den hohlzylindrischen Schaft (12, 42, 76) ein Hohlraum gebildet wird, wobei ein Teil des hohlzylindrischen Schafts (12, 42, 76) vollständig von der Basislage (52, 72) umgeben ist, wobei innerhalb des hohlzylindrischen Schafts (12, 42, 76) ein Butzen (62, 82) von der Decklage (54, 74) abgetrennt ist, wobei eine formschlüssige Verbindung mit der Basislage (52, 72) durch Aufweiten des freien in Eintreibrichtung liegenden Endes des Verbindungselements (10, 30, 40, 58, 78) hergestellt ist, **dadurch gekennzeichnet, dass** im Hohlraum eine stoffschlüssige Verbindung zwischen der Basislage und dem Butzen (62, 82) besteht.

10. Bauteilverbindung nach Anspruch 9, **dadurch gekennzeichnet, dass** im Hohlraum in Umfangsrichtung des hohlzylindrischen Schafts wirkende Mitnahmestrukturen angeordnet sind, die von dem Material des Butzens umschlossen sind.

11. Bauteilverbindung nach Anspruch 9 oder 10, **dadurch gekennzeichnet, dass** eine formschlüssige Verbindung in Axialrichtung wirkend hergestellt ist, indem radial verdrängtes Material des aus der Decklage (54, 74) herausragenden Butzens (62, 82), einen Bund an der Decklage (54, 74) und / oder dem Verbindungselement (10, 30, 40, 58, 78) bildet.

12. Bauteilverbindung nach Anspruch 9 oder 10, **dadurch gekennzeichnet, dass** eine formschlüssige Verbindung in axialer Richtung wirkend durch einen Formschluss des Verbindungselements (10, 30, 40, 58, 78) mit der Decklage (54, 74) und durch einen Formschluss des Verbindungselements (10, 30, 40, 58, 78) mit der Basislage erzeugt wird.

13. Bauteilverbindung nach einem der Ansprüche 9 bis 12, **dadurch gekennzeichnet, dass** das Verbindungselement (10, 30, 40, 58, 78) eine höhere Festigkeit als die Basislage (52, 72) und die Decklage (54, 74) aufweist.

14. Bauteilverbindung nach einem der Ansprüche 9 bis 13, **dadurch gekennzeichnet, dass** die Basislage und die Decklage (54, 74) aus einem Nicht-Eisen-Metall bestehen und das Verbindungselement aus einem Stahl oder einem Nicht-Eisen-Metall.

15. Bauteilverbindung nach einem der Ansprüche 9 bis 14, **dadurch gekennzeichnet, dass** die Basislage und die Decklage (54, 74) aus einem thermoplastischen Kunststoff bestehen und das Verbindungselement aus einem Kunststoff oder einem Stahl oder einem Nicht-Eisen-Metall.

## Claims

1. Method for producing a component connection between two component layers (52, 54; 72, 74), comprising a base layer (52, 72) and a top layer (54, 74) arranged on top of it, in which a connecting element (10, 30, 40, 58, 78) having a hollow cylindrical shaft (12, 42, 76) is driven into the top layer (54, 74) by rotation and under an axial force, which causes a slug (62, 82) to be cut out of the top layer (54, 74) within the shaft and to be entrained by the connecting element as it rotates, which slug (62, 82) is welded to the base layer (52, 72) by rotation and under contact pressure, after which the connecting element (10, 30, 40, 58, 78) is at least partially pressed into the base layer (52, 72).

2. Method according to claim 1, **characterized in that** the speed at which the connecting element (10, 30, 40, 58, 78) is driven in until the slug (62, 82) is welded in place is at least 2,000 rpm.

3. Method according to claim 2, **characterized in that** a first process step is carried out in which the connecting element (10, 30, 40, 58, 78) is put in place at a cutting speed and under a cutting axial force to ensure that, as the connecting element (10, 30, 40, 58, 78) cuts out the slug (62, 82), the connecting element (10, 30, 40, 58, 78) will not become deformed before it has reached the surface of the base layer (52, 72).

4. Method according to claim 3, **characterized in that** a second process step is carried out in which the cut-out slug (62, 82) is welded to the base layer (52, 72) by applying an welding axial force to the slug (62, 82) while the latter continues to rotate, with the welding axial force exerted by the tool being increased as compared to the cutting axial force.

5. Method according to claim 4, **characterized in that** the connecting element (10, 30, 40, 58, 78) has a head that closes off the hollow cylindrical shaft (12, 42, 76) opposite its driving-in direction, with the welding axial force being exerted on the slug (62, 82) by the head of the connecting element.

6. Method according to claim 4, **characterized in that** the connecting element (10, 30, 40, 58, 78) is open opposite to the driving-in direction at least over the inner surface of the hollow cylindrical shaft (12, 42, 76), and the contact pressure is applied to the slug (62, 82) by a setting tool that also applies the contact pressure to the connecting element (10, 30, 40, 58, 78).

7. Method according to any one of the preceding claims 4 to 6, **characterized in that** a third process step is carried out in which the welding axial force is exerted on the connecting element (10, 30, 40, 58, 78) and the slug (62, 82) at a decreasing rotational speed with a rivet axial force that is higher than the welding axial force in order to produce the positive locking in the axial direction with the base layer (52, 72) and/or the top layer (54, 74).

8. Method according to claim 7, **characterized in that** the connecting element (10, 30, 40, 58, 78) is open against the driving-in direction at least over the inner surface of the hollow cylindrical shaft (12, 42, 76), and the contact pressure is applied to the slug (62, 82) by a setting tool that also applies the contact pressure to the connecting element (10, 30, 40, 58, 78), thus expanding the end of the slug (62, 82) that is opposite the driving-in direction.

9. Component connection comprising a base layer (52, 72) and at least one top layer (54, 74) arranged on top of it, as well as a connecting element (10, 30, 40, 58, 78) with a hollow cylindrical shaft (12, 42, 76) and a drive that can be used to drive the shaft (12, 42, 76) in the direction of rotation, wherein the hollow cylindrical shaft has at least one free end, wherein the drive is arranged opposite the free end, wherein a cavity is formed by the hollow cylindrical shaft (12, 42, 76), wherein part of the hollow cylindrical shaft (12, 42, 76) is completely surrounded by the base layer (52, 72), wherein a slug (62, 82) is cut out of the top layer (54, 74) within the hollow cylindrical shaft (12, 42, 76), wherein a positive connection with the base layer (52, 72) is produced by expanding the free end of the connecting element (10, 30, 40, 58, 78) in the driving-in direction, **characterized in that** in the cavity, there is a material bond between the base layer and the slug (62, 82).

10. Component connection according to claim 9, **characterized in that** entraining structures acting in the circumferential direction of the hollow cylindrical shaft are arranged in the cavity and are enclosed by the material of the slug.

11. Component connection according to any one of claims 9 or 10 above, **characterized in that** a positive-locking connection is produced, acting in the axial direction, **in that** radially displaced material of the slug (62, 82) projecting from the top layer (54, 74) forms a collar on the top layer (54, 74) and/or on the connecting element (10, 30, 40, 58, 78).

12. Component connection according to any one of claims 9 or 10 above, **characterized in that** a positive-locking connection acting in the axial direction is generated by a positive fit of the connecting element (10, 30, 40, 58, 78) with the top layer (54, 74) and by a positive fit of the connecting element (10, 30, 40, 58, 78) with the base layer.

13. Component connection according to any one of claims 9 to 12, **characterized in that** the connecting element (10, 30, 40, 58, 78) has a higher strength than the base layer (52, 72) and the top layer (54, 74).

14. Component connection according to any one of claims 9 to 13, **characterized in that** the base layer and the top layer (54, 74) are made of a non-ferrous metal, and the connecting element is made of a steel or a non-ferrous metal.

15. Component connection according to any one of claims 9 or 14 above, **characterized in that** the base layer and the top layer (54, 74) are made of a thermoplastic material, and the connecting element is made of a plastic or a steel or a non-ferrous metal.

## Revendications

1. Procédé pour la production d'un assemblage de pièces entre deux couches de pièces (52, 54 ; 72, 74),
comprenant une couche de base (52, 72) et une couche de recouvrement (54, 74) située sur celle-ci, dans lequel un élément de liaison (10, 30, 40, 58, 78) présentant un arbre cylindrique creux (12, 42, 76) est introduit dans la couche de recouvrement (54, 74) sous l'effet d'une rotation et d'une force axiale, dans lequel à l'intérieur de l'arbre une pastille (62, 82) est séparée de la couche de recouvrement (54, 74), et est entraînée par l'élément de liaison dans sa rotation, dans lequel la pastille (62, 82) est soudée à la couche de base (52, 72) sous l'effet d'une rotation et force de pression, après quoi l'élément de liaison (10, 30, 40, 58, 78) est enfoncé au moins en partie dans la couche de base (52, 72).

2. Procédé selon la revendication 1, **caractérisé en ce que** la vitesse de rotation, à laquelle l'élément de liaison (10, 30, 40, 58, 78) est entraîné jusqu'à ce que la pastille (62, 82) soit soudée, atteint au moins 2 000 tours/minute.

3. Procédé selon la revendication 2, **caractérisé en ce qu'**une première étape de processus est accomplie, dans laquelle l'élément de liaison (10, 30, 40, 58, 78) est posé pour une vitesse de rotation de séparation et force axiale de séparation, de sorte que l'élément de liaison (10, 30, 40, 58, 78) lors de la séparation de la pastille (62, 82) ne se déforme pas tant que l'élément de liaison (10, 30, 40, 58, 78) n'a pas atteint la surface de la couche de base (52, 72).

4. Procédé selon la revendication 3, **caractérisé en ce qu'**une deuxième étape de processus est accomplie, lors de laquelle le soudage ferme de la pastille (62, 82) découpée s'effectue sur la couche de base (52, 72), du fait qu'une force de soudage axiale est appliquée sur la pastille (62, 82) sous l'effet d'une rotation prolongée, dans lequel la force de soudage axiale exercée par l'outil est augmentée par rapport à la force axiale de séparation.

5. Procédé selon la revendication 4, **caractérisé en ce que** l'élément de liaison (10, 30, 40, 58, 78) présente une tête fermant l'arbre cylindrique creux (12, 42, 76) par rapport à sa direction d'enfoncement, dans lequel la force de soudage axiale est exercée sur la pastille (62, 82) par la tête de l'élément de liaison.

6. Procédé selon la revendication 4, **caractérisé en ce que** l'élément de liaison (10, 30, 40, 58, 78) est ouvert à l'encontre de la direction d'enfoncement au moins sur toute l'étendue de la surface intérieure de l'arbre cylindrique creux (12, 42, 76) et la force de pression est appliquée sur la pastille (62, 82) par un outil de pose, qui sollicite également l'élément de liaison (10, 30, 40, 58, 78) avec la force de pression.

7. Procédé selon l'une quelconque des revendications précédentes 4 à 6, **caractérisé en ce qu'**une troisième étape de processus est accomplie, lors de laquelle la force de soudage axiale est exercée sur l'élément de liaison (10, 30, 40, 58, 78) et la pastille (62, 82) pour une vitesse de rotation décroissante avec une force axiale de rivetage accrue par rapport à la force de soudage axiale pour l'établissement de la complémentarité de formes dans la direction axiale avec la couche de base (52, 72) et/ou couche de recouvrement (54, 74).

8. Procédé selon la revendication 7, **caractérisé en ce que** l'élément de liaison (10, 30, 40, 58, 78) est ouvert à l'encontre de la direction d'enfoncement au moins sur toute la surface intérieure de l'arbre cylindrique creux (12, 42, 76) et la force de pression est appliquée sur la pastille (62, 82) par un outil de pose, qui sollicite également l'élément de liaison (10, 30, 40, 58, 78) avec la force de pression, dans lequel la pastille (62, 82) est élargie à son extrémité située à l'encontre de la direction d'enfoncement.

9. Assemblage de pièces comprenant une couche de base (52, 72) et au moins une couche de recouvrement (54, 74) située sur celle-ci, ainsi qu'un élément de liaison (10, 30, 40, 58, 78) avec un arbre cylindrique creux (12, 42, 76) et un entraînement, par l'intermédiaire duquel l'arbre (12, 42, 76) peut être entraîné dans la direction de rotation, dans lequel l'arbre cylindrique creux présente au moins une extrémité libre, dans lequel l'entraînement est disposé à l'opposé de l'extrémité libre, dans lequel une cavité est formée par l'arbre cylindrique creux (12, 42, 76), dans lequel une partie de l'arbre cylindrique creux (12, 42, 76) est entièrement entourée par la couche de base (52, 72), dans lequel à l'intérieur de l'arbre cylindrique creux (12, 42, 76) une pastille (62, 82) est séparée de la couche de recouvrement (54, 74), dans lequel une liaison par coopération de formes est établie avec la couche de base (52, 72) par élargissement de l'extrémité libre de l'élément de liaison (10, 30, 40, 58, 78) située dans la direction d'enfoncement, **caractérisé en ce qu'**une liaison de matière est présente entre la couche de base et la pastille (62, 82) dans la cavité.

10. Assemblage de pièces selon la revendication 9, **caractérisé en ce que** des structures d'entraînement agissant dans la direction périphérique de l'arbre cylindrique creux, qui sont entourées par le matériau de la pastille, sont disposées dans la cavité.

11. Assemblage de pièces selon la revendication 9 ou 10, **caractérisé en ce qu'**une liaison par coopération de formes est établie de manière à agir dans la direction axiale, du fait que le matériau repoussé radialement de la pastille (62, 82) faisant saillie de la couche de recouvrement (54, 74) forme un rebord sur la couche de recouvrement (54, 74) et/ou l'élément de liaison (10, 30, 40, 58, 78).

12. Assemblage de pièces selon la revendication 9 ou 10, **caractérisé en ce qu'**une liaison par coopération de formes est produite de manière à agir dans la direction axiale par une coopération de formes de l'élément de liaison (10, 30, 40, 58, 78) avec la couche de recouvrement (54, 74) et par une coopération de formes de l'élément de liaison (10, 30, 40, 58, 78) avec la couche de base.

13. Assemblage de pièces selon l'une quelconque des revendications 9 à 12, **caractérisé en ce que** l'élément de liaison (10, 30, 40, 58, 78) présente une résistance plus élevée que la couche de base (52, 72) et la couche de recouvrement (54, 74).

14. Assemblage de pièces selon l'une quelconque des revendications 9 à 13, **caractérisé en ce que** la couche de base et la couche de recouvrement (54, 74) sont constituées d'un métal non ferreux et l'élément de liaison d'un acier ou d'un métal non ferreux.

15. Assemblage de pièces selon l'une quelconque des revendications 9 à 14, **caractérisé en ce que** la couche de base et la couche de recouvrement (54, 74) sont constituées d'un thermoplastique et l'élément de liaison d'une matière plastique ou d'un acier ou d'un métal non ferreux.
